# EUROPÄISCHE PATENTSCHRIFT

(11) **EP 1 726 865 B1**
(45) Veröffentlichungstag und Bekanntmachung des Hinweises auf die Patenterteilung: **24.02.2010**
(21) Anmeldenummer: 06008914.1
(22) Anmeldetag: 28.04.2006
(51) Int. Cl.: F16L 37/098, F16L 37/084

(54) **Verbindungsanordnung mit Endabschnitten zweier zu verbindender Fluidleitungen**
Coupling assembly with end sections of two fluid conduits to be connected
Ensemble de raccordement de sections terminales de deux conduits de fluide à connecter

(30) Priorität: 27.05.2005 DE 102005024267; 20.12.2005 EP 05027825
(43) Veröffentlichungstag der Anmeldung: 29.11.2006
(73) Patentinhaber: NORMA Germany GmbH, 63277 Maintal (DE)
(72) Erfinder: Kertesz, Janos, 65719 Hofheim (DE); Wachter, Gerhard, 63654 Büdingen (DE)
(74) Vertreter: Knoblauch, Andreas

(56) Entgegenhaltungen:
- EP-A- 1 378 701
- DE-A1- 19 756 987
- DE-A1- 19 855 674
- DE-C1- 3 702 246
- GB-A- 1 167 076
- GB-A- 1 365 151
- JP-A- 8 145 265

## Beschreibung

Die Erfindung bezieht sich auf eine Verbindungsanordnung mit Endabschnitten zweier zu verbindender Fluidleitungen und mit einem Kupplungselement, das eine um eine Achse umlaufende Außenseite und eine um die Achse umlaufende Innenseite aufweist, wobei sich auf dem Umfang der Endabschnitte in deren Umfangsrichtung erste Halterippen und an der Innenseite des Kupplungselements in deren Umfangsrichtung in der Nähe jedes axialen Endes des Kupplungselements zweite Halterippen erstrecken und das Kupplungselement unter elastischer Aufweitung mit den Endabschnitten und der eine Endabschnitt abgedichtet mit dem anderen Endabschnitt koaxial zusammengesteckt ist und die zweiten Halterippen hinter den ersten Halterippen eingerastet sind.

Bei einer Verbindungsanordnung dieser Art, die aus der EP 1 378 701 A1 bekannt ist, besteht das Kupplungselement aus elastischem Kunststoff in Form zweier ovaler Ringe, die durch zwei sich diametral gegenüberliegende Stege verbunden sind. Die Ringe sind innen mit Halterippen in Form von Rastnasen versehen. Beim Einstecken der Endabschnitte der Fluidleitungen in die Ringe werden die Ringe elastisch durch die Halterippen auf den Endabschnitten aufgeweitet, bis die Rastnasen der Ringe hinter den Halterippen der Endabschnitte einrasten. Im eingekuppelten Zustand verbleibt zwischen den Ringbereichen mit dem kleineren Krümmungsradius und den Endabschnitten ein Spielraum, der ein radiales Zusammendrücken der Ringe zum Entkuppeln ermöglicht. Wegen der weiten Zwischenräume zwischen den Stegen und des Entkupplungsspielraums zwischen den Ringen und den Endabschnitten besteht die Möglichkeit, daß die in das Kupplungselement eingeführten Endabschnitte der Fluidleitungen verschmutzen. Dies kann ein wiederholtes Ein- und Auskuppeln erschweren. Ferner besteht die Gefahr, daß sich die Verbindung löst, wenn auf die Endabschnitte gegensinnige Querkräfte ausgeübt werden.

In JP 08145265 A ist eine Verbindungsanordnung zum Verbinden zweier Endabschnitte zweier zu verbindender Fluidleitungen gezeigt, wobei die Endabschnitte in umlaufende Nuten in Stirnseiten eines Kupplungselements eingeführt sind. An den axialen Enden des Kupplungselements sind Halterippen vorgesehen, die in umlaufende Nuten der Endabschnitte eingreifen. Um kein elastisches Aufweiten im Bereich der Halterippen zu ermöglichen, ist das Kupplungselement mit Ausformungen versehen.

Aus DE 37 02 246 C1 ist eine Steckkupplung zum Verbinden eines Schlauches mit einem Rohr bekannt, wobei der Schlauch mit einem Endabschnitt in einem Endabschnitt des Rohres eingesteckt wird. Am Schlauch ist ein Kupplungselement vorgesehen, das radial federnde Haken mit radialen Nasen aufweist, die hinter einer Halterippe des Rohres einrasten können. Die radial federnden Haken sind dabei über einen Ringflansch miteinander verbunden, der reibschlüssig auf dem Endabschnitt des Schlauchs befestigt ist.

In GB 1 365 151 A ist ein Kupplungselement beschrieben, das an seinen axialen Enden radial nach innen ragende Halterippen aufweist. Die Halterippen sind dabei einstückig mit dem Kupplungselement ausgebildet. Eine ungenaue axiale Ausrichtung von zu verbindenden Leitungen wird durch die Flexibilität der Halterippen ausgeglichen. Die Halterippen erscheinen also derart flexibel, dass ein Aufweiten des Kupplungselements beim Einführen der Fluidleitungen nicht nötig ist. Ein Aufweiten würde auch durch das verwendete Material verhindert werden und ist aufgrund ausschließlich ebener Endabschnitte der Leitungen auch nicht erforderlich.

GB 1 167 076 A zeigt eine Verbindungsanordnung mit Endabschnitten zweier zu verbindender Fluidleitungen, wobei der Endabschnitt eine Nut aufweist, in der ein ringförmiges Kupplungselement angeordnet ist. Das Kupplungselement weist nach außen ragende Halterippen auf, die in eine Nut eingreifen. Die Nut ist in einem Arm ausgebildet, der Teil des Endabschnitts ist. Das Kupplungselement weist vier Segmente mit geringer Elastizität auf, zwischen denen gummiartige Segmente angeordnet sind.

Der Erfindung liegt die Aufgabe zugrunde, eine Verbindungsanordnung der eingangs genannten Art anzugeben, bei der die Gefahr einer Verschmutzung der Verbindungsstelle der Endabschnitte und einer unabsichtlichen Entkupplung vermieden ist.

Erfindungsgemäß ist diese Aufgabe dadurch gelöst, daß das Kupplungselement eine ringsum geschlossene, kreiszylindrische Hülse ist.

Bei dieser Lösung sorgt die Hülse sowohl für eine zusätzliche Abdichtung der Verbindungsstelle der Endabschnitte gegen eine Verschmutzung als auch für eine zusätzliche Versteifung dieser Verbindungsstelle gegen Querkräfte.

Vorzugsweise ist dafür gesorgt, daß die Hülse sich über mindestens 80° und weniger als 180° in Umfangsrichtung erstreckende, biegesteife Hülsensegmente aufweist, deren benachbarte Ränder jeweils durch elastische Hülsensegmente, die elastisch dehnbares Material aufweisen, stoffschlüssig oder einstückig verbunden sind. Die biegesteifen Hülsensegmente tragen zu einer zusätzlichen Versteifung der Hülse und damit der Verbindungsstelle der Endabschnitte bei.

Die elastischen Hülsensegmente können die biegesteifen Hülsensegmente in deren Umfangsrichtung mit seitlichen Fortsätzen überlappen, und die Fortsätze können mit den biegesteifen Hülsensegmenten stoffschlüssig verbunden sein. Diese Fortsätze erhöhen die Festigkeit der Verbindung zwischen den Hülsensegmenten und die Griffigkeit der Hülse bei der Handhabung der Hülse.

Auf der Innenseite der Hülse kann eine Anschlagrippe zur Einschubbegrenzung der Endabschnitte umlaufen, an der der eine Endabschnitt mit seinem freien Ende und der andere Endabschnitt mit einer Schulter anliegt. Die Anschlagrippe erhöht zusätzlich die Quersteifigkeit der Hülse und trägt auch zur Abdichtung der Verbindungsstelle bei.

Vorzugsweise besteht die Anschlagrippe aus einstückig mit den biegesteifen Hülsensegmenten ausgebildeten Rippensegmenten und einstückig mit den elastischen Hülsensegmenten ausgebildeten Rippensegmenten. Zumindest die einstückig mit den elastischen Hülsensegmenten ausgebildeten Rippensegmente erhöhen aufgrund ihrer Elastizität die Dichtigkeit der Verbindung.

Wenn die Anschlagrippe ein elastisch dehnbares Material aufweist und einstückig mit den elastischen Hülsensegmenten ausgebildet ist, erhöht sie die Dichtigkeit der Verbindung über ihren gesamten Umfang.

Die biegesteifen Hülsensegmente können in ihrer Außenseite Vertiefungen aufweisen, in denen ein elastisch dehnbares Material eingebettet ist. Das in den Vertiefungen eingebettete elastische Material erhöht zusätzlich die Griffigkeit der Hülse bei ihrer Handhabung.

Sodann kann dafür gesorgt sein, daß die ein elastisch dehnbares Material aufweisende Anschlagrippe durch Öffnungen in den biegesteifen Hülsensegmenten mit dem elastisch dehnbaren Material in den Vertiefungen einstükkig verbunden ist. Bei dieser Ausbildung können die Anschlagrippe und das elastisch dehnbare Material in den Vertiefungen in einem Spritzgießvorgang hergestellt werden.

Alternativ kann dafür gesorgt sein, daß die Hülse einstückig aus Hartgummi oder einem verstärkten und/oder vernetzten Elastomer besteht. Die Hülse kann dann ebenfalls in einem einzigen Spritzgießvorgang hergestellt werden und ist sowohl elastisch als auch hinreichend biegesteif.

Stattdessen ist es möglich, daß die Hülse, einschließlich der zweiten Halterippen, ein elastisch dehnbares Material aufweist, daß die zweiten Halterippen in Umfangsrichtung auseinanderliegen und in dem elastisch dehnbaren Material der Hülse sich über den Umfangsbereich der zweiten Halterippen erstreckende Zylinderteile aus Metall oder hartelastischem Kunststoff mit an ihren Umfangsrändern radial nach innen ragenden Schenkeln so eingebettet sind, daß die Schenkel in die zweiten Halterippen ragen. Auch bei dieser Ausbildung der Hülse ergeben sich im Bereich der aus Metall oder hartelastischem Kunststoff bestehenden Zylinderteile biegesteife Hülsensegmente und zwischen diesen elastische Hülsensegmente, die ein Aufweiten der Hülse zum Ein- und Auskuppeln der Endabschnitte ermöglichen.

Bei letzterer Ausbildung kann ebenfalls dafür gesorgt sein, daß auf der Innenseite der Hülse eine Anschlagrippe zur Einschubbegrenzung der Endabschnitte umläuft, wobei die Anschlagrippe das elastisch dehnbare Material der Hülse aufweist. Die Anschlagrippe ist dann wiederum gleichzeitig zur Abdichtung der Verbindungsstelle der Endabschnitte geeignet.

Die zweiten Halterippen der Hülse können sich über mindestens 80° und weniger als 180° des Hülsenumfangs erstrecken.

Ferner können hinter den ersten Halterippen sich in Umfangsrichtung der Endabschnitte Nuten erstrecken, deren axiale Weite der axialen Breite der ersten Halterippen entspricht. Diese Nuten ermöglichen eine Einschubbegrenzung der Endabschnitte auch dann, wenn die Hülse keine Anschlagrippe und der eine Endabschnitt, auf den der andere Endabschnitt beim Zusammenstecken der Endabschnitte aufgeschoben wird, keine Anschlagschulter aufweist. Desgleichen kann die Hülse auf einem der Endabschnitte unverschiebbar und unverlierbar vormontiert werden.

Vorzugsweise ist ferner dafür gesorgt, daß hinter einer der ersten Halterippen des einen Endabschnitts auf ihrer dem in die Hülse eingeführten Ende dieses Endabschnitts abgekehrten Seite zwei in einer der radialen Höhe dieser einen Halterippe entsprechenden Höhe radial vorstehende Nocken sich diametral in Bezug auf die Längsmittelachse dieses Endabschnitts gegenüberliegen. Diese Nocken ermöglichen ein Entkuppeln des die Nocken aufweisenden Endabschnitts durch manuelle Drehung der Hülse, bis die auf Seiten dieses Endabschnitts liegenden Halterippen der Hülse auf den Nocken aufsitzen, und anschließend das Herausziehen dieses Endabschnitts aus der Hülse.

Hierbei sollten sich die ersten Halterippen über den gesamten Umfang der Endabschnitte erstrecken.

Die Erfindung und ihre Weiterbildungen werden nachstehend anhand der beiliegenden Zeichnungen eines bevorzugten Ausführungsbeispiels und seiner Abwandlungen beschrieben. In den Zeichnungen stellen dar:
- Fig. 1: eine perspektivische Ansicht eines Ausführungsbeispiels einer erfindungsgemäßen Verbindungsanordnung in axial aufgeschnittenem, eingekuppeltem Zustand,
- Fig. 2: die Verbindungsanordnung nach Fig. 1 im entkuppelten Zustand,
- Fig. 3: eine Abwandlung einer Hülse der Verbindungsanordnung nach Fig. 1 in perspektivischer Ansicht,
- Fig. 4: eine Seitenansicht der Hülse nach Fig. 3 in verkleinertem Maßstab,
- Fig. 5: den Schnitt V-V der Fig. 4,
- Fig. 6: den Schnitt VI-VI der Fig. 5,
- Fig. 7: den Schnitt VII-VII der Fig. 5,
- Fig. 8: eine perspektivische Ansicht einer weiteren Abwandlung der Hülse nach Fig. 1,
- Fig. 9: eine Seitenansicht der Hülse nach Fig. 8 in verkleinertem Maßstab,
- Fig. 10: den Schnitt X-X der Fig. 9,
- Fig. 11: den Schnitt XI-XI der Fig. 10,
- Fig. 12: eine andere Seitenansicht der Hülse nach Fig. 8,
- Fig. 13: eine perspektivische Ansicht einer weiteren Abwandlung der Hülse nach Fig. 1,
- Fig. 14: eine Axialansicht der Hülse nach Fig. 13,
- Fig. 15: den Schnitt XV-XV der Fig. 14,
- Fig. 16: den Schnitt XVI-XVI der Fig. 14,
- Fig. 17: eine perspektivische Ansicht einer weiteren Abwandlung der Hülse nach Fig. 1,
- Fig. 18: eine Seitenansicht der Hülse nach Fig. 17 in verkleinertem Maßstab und
- Fig. 19: den Schnitt IXX-IXX der Fig. 18.

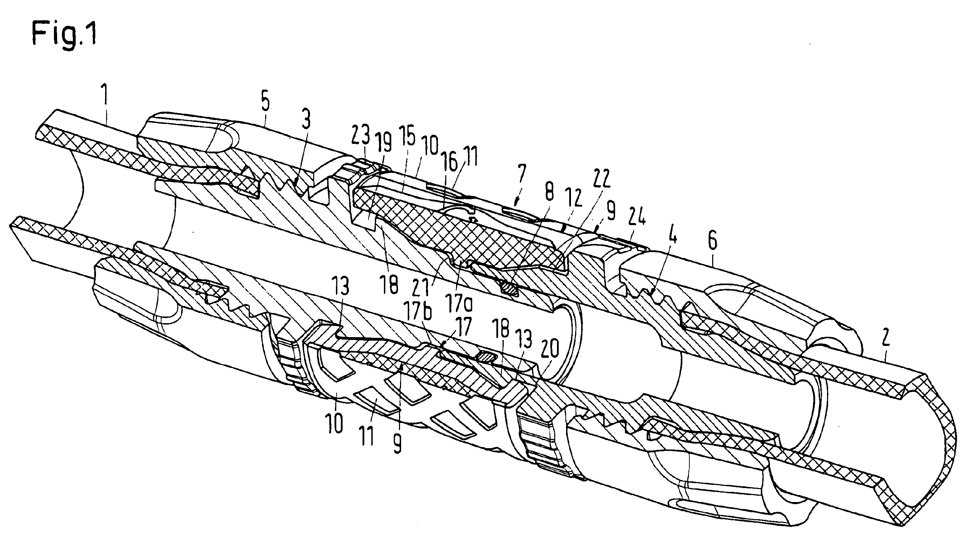

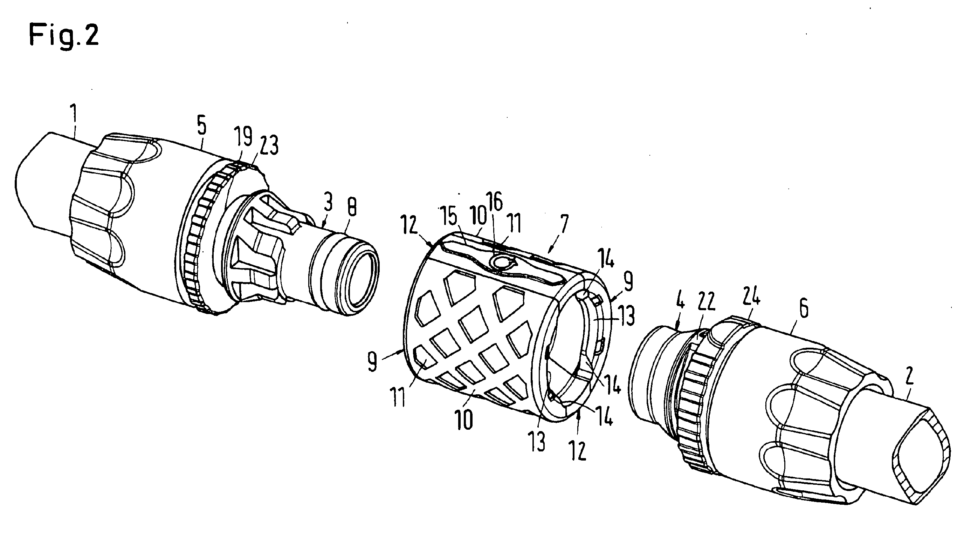

Die Verbindungsanordnung nach den Fig. 1 und 2 besteht aus zwei Fluidleitungen 1 und 2, hier Schläuche, mit Endabschnitten 3 und 4, zwei die Fluidleitungen 1, 2 mit jeweils einem der Endabschnitte 3, 4 verbindenden Überwurfmuttern 5 und 6, einem Kupplungselement in Form einer ringsum geschlossenen, kreiszylindrischen Hülse 7 und einem Dichtring 8, wobei alle Teile aus Kunststoff bestehen. Die Endabschnitte 3, 4 und die Überwurfmuttern 5, 6 können aber auch aus Metall bestehen. Statt die Endabschnitte 3, 4 und die Fluidleitungen 1, 2 miteinander durch die Überwurfmuttern 5, 6 zu verbinden, können sie auch einteilig aus Kunststoff ausgebildet sein. Ferner kann es sich zumindest bei einem der beiden Endabschnitte 3, 4 um einen Rohrstutzen handeln, z.B. um den Anschluß-Rohrstutzen an einem Kühler eines Kraftfahrzeugs, der dann mit einer im Inneren des Kühlers verlaufenden Kühlwasserleitung in Form einer Kühlschlange verbunden ist. In diesem Falle bestünde der betreffende Endabschnitt jedoch aus Metall.

Die Hülse 7 besteht aus zwei sich diametral in Bezug auf ihre Längsmittelachse gegenüberliegenden Hülsensegmenten aus hartelastischem, thermoplastischem Kunststoff, z.B. einem der Kunststoffe Polypropylen (PP), Polyethylen (PE), Polyamid (PA), Polybutylenterephthalat (PBT), Polyethylenterephthalat (PET), Polybutylennaphthalat (PBN), Polyethylennaphthalat (PEN), Polyoxymethylen (POM), Polyphenylensulfid (PPS), Polyphenylenamid (PPA) und Duroplast, so daß die Hülsensegmente 9 biegesteif sind. In der Außenseite der Hülsensegmente 9 sind Einsätze 10 aus Elastomer eingespritzt. Die Einsätze 10 sind mit Vertiefungen 11 versehen, um die Hülse 7 griffig zu gestalten. Die Einsätze können aber auch entfallen. Stattdessen können die Hülsensegmente 9 außen geriffelt sein. Zwischen den Hülsensegmenten 9 und den Einsätzen 10 sind elastische Hülsensegmente 12 aus einem thermoplastischen, elastisch dehnbaren Material, z.B. einem der Kunststoffe thermoplastisches Elastomer (TPE), vernetztes thermoplastisches Elastomer (TPE-V), thermoplastisches Polyurethan (TPU), thermoplastisches Etheresterelastomer (TEEE), Ethylenpropylenkautschuk (EPDM), Fluorkautschuk (FKM), Fluorsilicon, Liquid Silicon Rubber (LSR) und Ethylenvinylacetat (EVA), an den Hülsensegmenten 9 und an den Einsätzen 10 angespritzt, so daß die Hülsensegmente 9 und ihre Einsätze 10 stoffschlüssig mit den Hülsensegmenten 12 verbunden (verschmolzen) und die Hülse 7 radial aufweitbar ist. Die Hülsensegmente 9 erstrecken sich mithin über einen Umfangsbereich der Hülse 7 von weniger als 180°, jedoch mehr als 80°, vorzugsweise über einen Bereich von etwa 140° bis 160°.

Die biegesteifen Hülsensegmente 9 sind auf ihrer Innenseite in der Nähe ihrer Enden mit in Umfangsrichtung verlaufenden Halterippen 13 versehen, die an ihren Umfangsenden schräge Flanken 14 aufweisen (Fig. 2).

Die elastischen Hülsensegmente 12 sind außen mit einer sich axial erstreckenden Noppe 15 versehen, die in der Mitte einen kreisbogenförmigen Doppelpfeil 16 aufweist, der auf die Verdrehbarkeit der Hülse 7 hinweist.

Innen ist die Hülse 7 in ihrer axialen Mitte mit einer umlaufenden Anschlagrippe 17 versehen (Fig. 1), deren Segmente im Bereich der elastischen Hülsensegmente 12 mit 17a und im Bereich der hartelastischen Hülsensegmente 9 mit 17b bezeichnet sind. Die Anschlagrippensegmente 17a bestehen mithin aus dem gleichen Material wie die elastischen Hülsensegmente 12 und die Anschlagrippensegmente 17b aus dem gleichen Material wie die hartelastischen Hülsensegmente 9.

Die Endabschnitte 3, 4 haben außen auf ihrem Umfang umlaufende Halterippen 18 und werden zum Verbinden der Fluidleitungen 1, 2 axial in die Hülse 7 eingeführt und dabei zusammengesteckt, nachdem der Dichtring 8 in einer Ringnut des in den Endabschnitt 4 eingesteckten Endabschnitts 3 eingesetzt worden ist. Beim Einführen der Endabschnitte 3, 4 in die Hülse in einer vorbestimmten relativen Drehwinkellage in Bezug auf den Endabschnitt 4 wird die Hülse 7 beim Hinweggleiten der Halterippen 13 der Hülse 7 über die Halterippen 18 der Endabschnitte 3, 4 radial elastisch aufgeweitet, bis die Halterippen 13 der Hülse 7 hinter den Halterippen 18 der Endabschnitte 3, 4 jeweils in einer an den Halterippen 18 angrenzenden, sich in Umfangsrichtung erstreckenden Nut 19 bzw. 20 einrasten. Dabei legen sich die Endabschnitte 3, 4 gleichzeitig an der Anschlagrippe 17 an. Um das Anliegen des Endabschnitts 3 an der Anschlagrippe 17 zu ermöglichen, ist der Endabschnitt 3 mit einer Schulter 21 versehen. Die Nut 19 in dem Endabschnitt 3 ist als umlaufende Ringnut ausgebildet. Dagegen ist die Nut 20 in dem Endabschnitt nicht umlaufend, sondern durch zwei Nocken 22 unterbrochen, die in einer der radialen Höhe der Halterippe 18 des Endabschnitts 4 entsprechenden Höhe radial vorstehen und sich diametral in Bezug auf die Längsmittelachse des Endabschnitts 4 gegenüberliegen und schräge Flanken haben. Die axiale Breite der Halterippen 13 der Hülse 7 entspricht der axialen Weite der Nuten 19 und 20. Die Halterippen 13 der Hülse 7 können sich daher auch beim Einführen der Endabschnitte 3, 4 in die Hülse an die Nuten 19 und 20 begrenzenden Flanschen 23, 24 der Endabschnitte 3, 4 anlegen. Im eingekuppelten Zustand der Verbindungsanordnung nach Fig. 1 liegen die Hülsensegmente 12 mit ihren Enden auf den Nocken 23 auf. Zum Lösen der Verbindung wird die Hülse 7 gedreht. Dabei laufen die Halterippen 13 am einen Ende der biegesteifen Hülsensegmente 9 mit ihren schrägen Flanken 14 auf entsprechend schräge Flanken der Nocken 22 unter Aufweitung der Hülse 7 auf die Nocken 22 auf. In dieser Drehwinkellage kann die Hülse 7 zusammen mit dem Endabschnitt 3 und der biegsamen Fluidleitung 1 von dem Endabschnitt 4 abgezogen werden.

Die Hülse 7 kann ferner auf dem Endabschnitt 3 in der in Fig. 1 dargestellten Lage vormontiert werden und schließlich mit dem Endabschnitt 4 und der darauf befestigten Fluidleitung 2 in einer Drehwinkellage, in der die elastischen Hülsensegmente 12 mit den Nocken 22 fluchten, zusammengesteckt werden, um die Fluidleitungen 1, 2 zu verbinden. Die Anschlagrippe 17 bewirkt nicht nur eine Einschubbegrenzung der Endabschnitte 3, 4 in die Hülse 7, sondern auch eine Abdichtung der Verbindungsstelle der Endabschnitte 3, 4 zusätzlich zu dem Dichtring 8.

Die Flansche 23, 24 sind mit Rippen versehen, so daß sie griffiger sind, um die Endabschnitte beim Drehen der Hülse 7 leichter festhalten zu können.

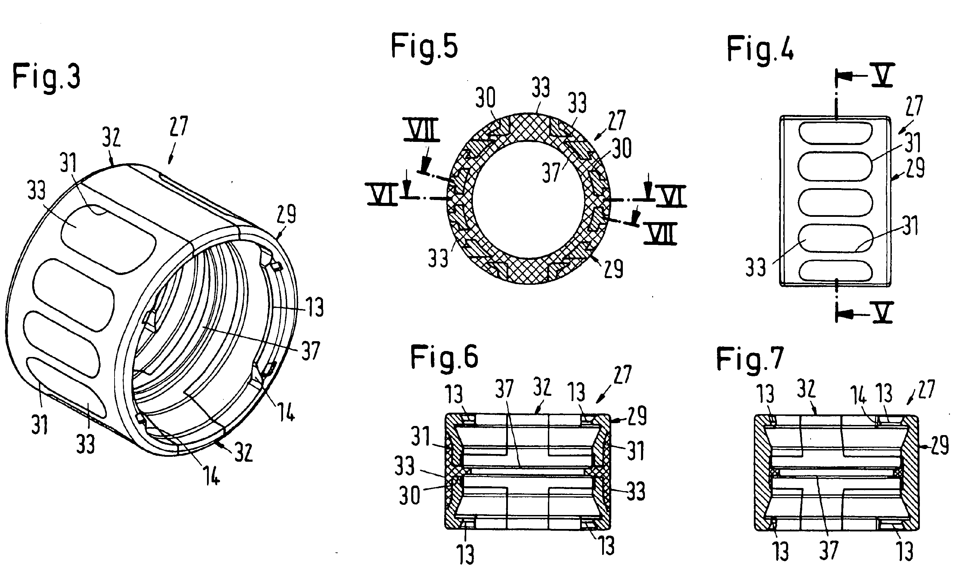

Die Fig. 3 bis 7 stellen eine gegenüber der Hülse 7 nach den Fig. 1 und 2 etwas abgewandelte Hülse 27 dar, wobei deren Teile, die denen der Hülse 7 ähneln, mit um zwanzig höheren Bezugszahlen und gleiche Teile mit den gleichen Bezugszahlen versehen sind.

An der Innenseite der biegesteifen Hülsensegmente 9 und der elastischen Hülsensegmente 32 ist eine umlaufende Anschlagrippe 37 aus dem gleichen thermoplastischen, elastischen Material wie das der elastischen Hülsensegmente 32 angespritzt. Gleichzeitig ist das elastische Material der Anschlagrippe 37 durch Öffnungen 30 in den biegesteifen Hülsensegmenten 29 hindurch in Vertiefungen 31 der biegesteifen Hülsensegmente 29 eingespritzt worden, so daß die Außenseite der Hülsensegmente 29 griffige Flächen 23 zur leichteren manuellen Verdrehung der Hülse 27 aufweist.

Die umlaufende elastische Anschlagrippe 37 hat den Vorteil, daß sie die Verbindungsstelle der Endabschnitte 3, 4 besser abdichtet als die im Bereich der biegesteifen Hülsensegmente 9 der Hülse 7 aus dem gleichen härteren Material wie die Hülsensegmente 9 ausgebildeten Abschnitte der Anschlagrippe 17, die nur im Bereich der elastischen Hülsensegmente 12 aus dem gleichen elastischen Material wie die Hülse 12 besteht.

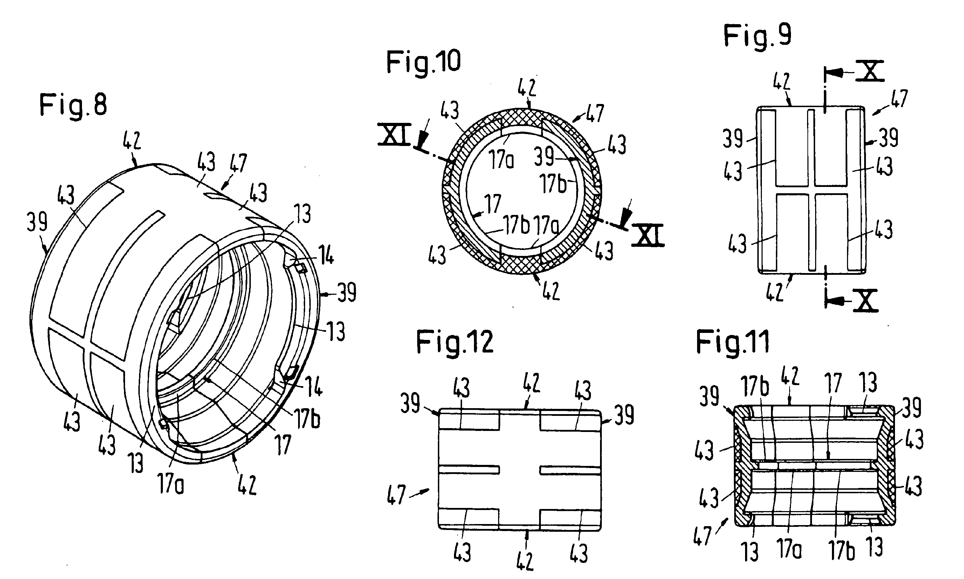

Die Fig. 8 bis 12 stellen eine weitere gegenüber der Hülse 7 nach den Fig. 1 und 2 etwas abgewandelte Hülse 47 dar. Diejenigen Teile der Hülse 47, die denen der Hülse 7 ähneln, sind mit um dreißig höheren Bezugszahlen versehen, während die einander gleichenden Teile mit den gleichen Bezugszahlen versehen sind.

Abweichend von der Hülse 7 nach den Fig. 1 und 2 sind die elastischen Hülsensegmente 42 mit seitlichen Fortsätzen 43 versehen, die in Vertiefungen der hartelastischen Hülsensegmente 39 eingespritzt und mit den Hülsensegmenten 39 stoffschlüssig verbunden sind. Die Fortsätze 43 erhöhen die Festigkeit der Verbindung der elastischen Hülsensegmente 42 mit den hartelastischen Hülsensegmenten 39. Die Noppe 15 der elastischen Hülsensegmente 12 der Hülse 7 nach den Fig. 1 und 2 ist weggelassen, da das elastische Material der Hülsensegmente 42 so gewählt sein kann, daß es hinreichend griffig ist. Zum Beispiel kann es sich um Siliconkautschuk handeln.

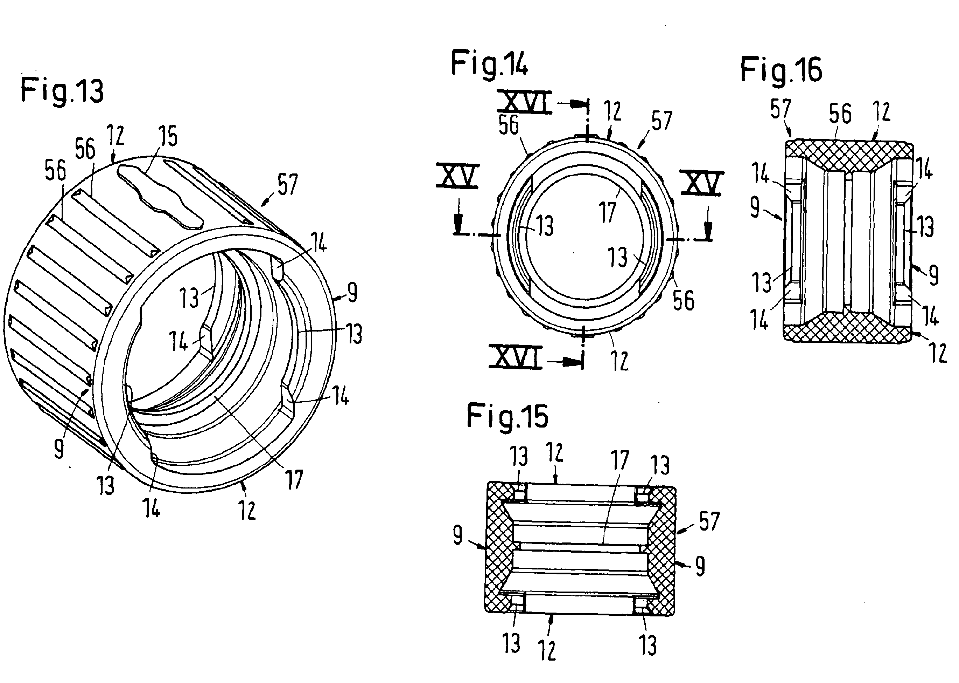

Die Fig. 13 bis 16 stellen eine weitere gegenüber der Hülse 7 nach den Fig. 1 und 2 etwas abgewandelte Hülse 57 dar, wobei diejenigen Teile der Hülse 57, die denen der Hülse 7 ähneln, mit um fünfzig höheren Bezugszahlen versehen sind, während die einander gleichenden Teile mit den gleichen Bezugszahlen versehen sind.

Die Hülse 57 besteht über ihren gesamten Umfang einstückig aus hartelastischem Material, z.B. Hartgummi oder verstärktem und/oder vernetztem thermoplastischen Elastomer. Die Halterippen 13 der Hülsensegmente 9 - letztere sind einstückig mit den Hülsensegmenten 12 ausgebildet - erstrecken sich über etwa 80° bis 100° in Umfangsrichtung der Hülse 57, vorzugsweise über etwa 90°. Daher sind die Hülsensegmente 9 weniger elastisch dehnbar als die dünneren Hülsensegmente 12, so daß die Hülse 57 weiterhin aufgeweitet werden kann. Zusätzlich zu den Noppen 15 ist die Hülse 57 mit über den Umfang verteilten axialen Rippen 56 versehen, um die Griffigkeit der Hülse 57 zu verbessern.

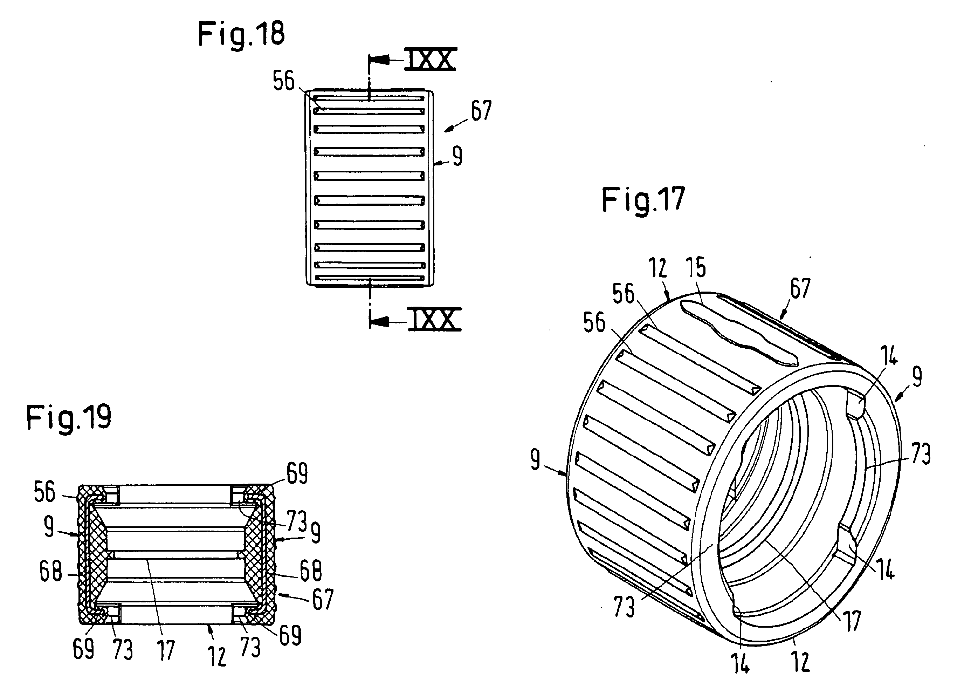

Die Fig. 17 bis 19 stellen eine weitere gegenüber der Hülse 7 nach den Fig. 1 und 2 etwas abgewandelte Hülse 67 dar, deren Teile, die denen der Hülse 7 ähneln, mit um sechzig höheren Bezugszahlen versehen sind, während die einander gleichenden Teile mit den gleichen Bezugszahlen versehen sind.

Die Hülse 67, einschließlich ihrer Halterippen 13 und der Anschlagrippe 17, weist über ihren gesamten Umfang das gleiche elastisch dehnbare Material wie die Hülsensegmente 12 der Hülse 7 nach den Fig. 1 und 2 auf. Im Umfangsbereich der Halterippen 13 ist jedoch jeweils ein Zylinderteil 68 aus Metall oder dem gleichen hartelastischen Kunststoff wie der der Hülsensegmente 9 der Halterippe 7 nach den Fig. 1 und 2 eingegossen. Die Zylinderteile 68 haben an ihren Umfangsrändern nach innen ragende Schenkel 69, die in die Halterippen 73 ragen. Die Schenkel 69 können auch in Umfangsrichtung unterbrochen sein.

## Patentansprüche

1. Verbindungsanordnung mit Endabschnitten (3, 4) zweier zu verbindender Fluidleitungen (1, 2) und mit einem Kupplungselement (7; 27; 37; 47; 57; 67), das eine um eine Achse umlaufende Außenseite und eine um die Achse umlaufende Innenseite aufweist, wobei sich auf dem Umfang der Endabschnitte (3, 4) in deren Umfangsrichtung erste Halterippen (18) und an der Innenseite des Kupplungselements (7; 27; 37; 47; 57; 67) in deren Umfangsrichtung in der Nähe jedes axialen Endes des Kupplungselements (7; 27; 37; 47; 57; 67) zweite Halterippen (13; 73) erstrecken und das Kupplungselement (7; 27; 37; 47; 57; 67) unter elastischer Aufweitung mit den Endabschnitten (3, 4) und der eine Endabschnitt (3) abgedichtet mit dem anderen Endabschnitt (4) koaxial zusammengesteckt ist und die zweiten Halterippen (13; 73) hinter den ersten Halterippen (18) eingerastet sind, **dadurch gekennzeichnet, daß** das Kupplungselement (7; 27; 37; 47; 57; 67) eine ringsum geschlossene, kreiszylindrische Hülse (7; 27; 37; 47; 57; 67) ist.

2. Verbindungsanordnung nach Anspruch 1, **dadurch gekennzeichnet, daß** die Hülse (7; 27; 37; 47; 57; 67) sich über mindestens 80° und weniger als 180° in Umfangsrichtung erstreckende, biegesteife Hülsensegmente (9; 29; 39) aufweist, deren benachbarte Ränder jeweils durch elastische Hülsensegmente (12; 32; 42), die elastisch dehnbares Material aufweisen, stoffschlüssig oder einstückig verbunden sind.

3. Verbindungsanordnung nach Anspruch 2, **dadurch gekennzeichnet, daß** die elastischen Hülsensegmente (42) die biegesteifen Hülsensegmente (39) in deren Umfangsrichtung mit seitlichen Fortsätzen (43) überlappen und die Fortsätze (43) mit den biegesteifen Hülsensegmenten (39) stoffschlüssig verbunden sind.

4. Verbindungsanordnung nach einem der Ansprüche 1 bis 3, **dadurch gekennzeichnet, daß** auf der Innenseite der Hülse (7; 27; 37; 47; 57; 67) eine Anschlagrippe (17) zur Einschubbegrenzung der Endabschnitte (3, 4) umläuft, an der der eine Endabschnitt (4) mit seinem freien Ende und der andere Endabschnitt (3) mit einer Schulter (21) anliegt.

5. Verbindungsanordnung nach den Ansprüchen 2 und 4, **dadurch gekennzeichnet, daß** die Anschlagrippe (17) aus einstückig mit den biegesteifen Hülsensegmenten (9; 39) ausgebildeten Rippensegmenten (17b) und einstückig mit den elastischen Hülsensegmenten (12; 42) ausgebildeten Rippensegmenten (17a) besteht.

6. Verbindungsanordnung nach Anspruch 4, **dadurch gekennzeichnet, daß** die Anschlagrippe (37) ein elastisch dehnbares Material aufweist und einstückig mit den elastischen Hülsensegmenten (32) ausgebildet ist.

7. Verbindungsanordnung nach Anspruch 6, **dadurch gekennzeichnet, daß** die biegesteifen Hülsensegmente (29) in ihrer Außenseite Vertiefungen (31) aufweisen, in denen ein elastisch dehnbares Material (33) eingebettet ist.

8. Verbindungsanordnung nach Anspruch 7, **dadurch gekennzeichnet, daß** die ein elastisch dehnbares Material aufweisende Anschlagrippe (37) durch Öffnungen (30) in den biegesteifen Hülsensegmenten (29) mit dem elastisch dehnbaren Material in den Vertiefungen (31) einstückig verbunden ist.

9. Verbindungsanordnung nach Anspruch 1, **dadurch gekennzeichnet, daß** die Hülse (57) einstückig aus Hartgummi oder einem verstärkten und/oder vernetzten Elastomer besteht.

10. Verbindungsanordnung nach Anspruch 1, **dadurch gekennzeichnet, daß** die Hülse (67), einschließlich der zweiten Halterippen (73), ein elastisch dehnbares Material aufweist, daß die zweiten Halterippen (73) in Umfangsrichtung auseinanderliegen und in dem elastisch dehnbaren Material der Hülse (67) sich über den Umfangsbereich der zweiten Halterippen (73) erstreckende Zylinderteile (68) aus Metall oder hartelastischem Kunststoff mit an ihren Umfangsrändern radial nach innen ragenden Schenkeln (69) so eingebettet sind, daß die Schenkel (69) in die zweiten Halterippen (73) ragen.

11. Verbindungsanordnung nach Anspruch 9 oder 10, **dadurch gekennzeichnet, daß** auf der Innenseite der Hülse (57; 67) eine Anschlagrippe (17) zur Einschubbegrenzung der Endabschnitte (3, 4) umläuft, wobei die Anschlagrippe (17) das elastisch dehnbare Material der Hülse (57; 67) aufweist.

12. Verbindungsanordnung nach einem der Ansprüche 1 bis 11, **dadurch gekennzeichnet, daß** sich die zweiten Halterippen (13; 73) über mindestens 80° und weniger als 180° des Hülsenumfangs erstrecken.

13. Verbindungsanordnung nach einem der Ansprüche 1 bis 12, **dadurch gekennzeichnet, daß** hinter den ersten Halterippen (18) sich in Umfangsrichtung der Endabschnitte (3, 4) Nuten (19, 20) erstrecken, deren axiale Weite der axialen Breite der ersten Halterippen (13; 73) entspricht.

14. Verbindungsanordnung nach einem der Ansprüche 1 bis 13, **dadurch gekennzeichnet, daß** hinter einer (18) der ersten Halterippen (18) des einen Endabschnitts (4) auf ihrer dem in die Hülse (7; 27; 37; 47; 57; 67) eingeführten Ende dieses Endabschnitts (4) abgekehrten Seite zwei in einer der radialen Höhe dieser einen Halterippe (18) entsprechenden Höhe radial vorstehende Nocken (22) sich diametral in Bezug auf die Längsmittelachse dieses Endabschnitts (4) gegenüberliegen.

15. Verbindungsanordnung nach einem der Ansprüche 1 bis 14, **dadurch gekennzeichnet, daß** sich die ersten Halterippen (18) über den gesamten Umfang der Endabschnitte (3, 4) erstrecken.

## Claims

1. Connecting arrangement with end portions (3, 4) of two fluid lines (1, 2) to be connected and with a coupling element (7; 27; 37; 47; 57; 67) which has an outside encircling an axis and an inside encircling the axis, first holding ribs (18) extending on the circumference of the end portions (3, 4) in their circumferential direction, and second holding ribs (13; 73) extending on the inside of the coupling element (7; 27; 37; 47; 57; 67) in its circumferential direction in the vicinity of each axial end of the coupling element (7; 27; 37; 47; 57; 67), and the coupling element (7; 27; 37; 47; 57; 67) being coaxially plugged, with elastic expansion, together with the end portions (3, 4) and one end portion (3) being coaxially plugged, sealed off, together with the other end portion (4), and the second holding ribs (13; 73) being latched behind the first holding ribs (18), **characterized in that** the coupling element (7; 27; 37; 47; 57; 67) is a circular-cylindrical sleeve (7; 27; 37; 47; 57; 67) closed all-round.

2. Connecting arrangement according to Claim 1, **characterized in that** the sleeve (7; 27; 37; 47; 57; 67) has flexurally rigid sleeve segments (9; 29; 39) which extend over at least 80° and less than 180° in the circumferential direction and the adjacent margins of which are connected in a materially integral manner or in one piece by means of respective elastic sleeve segments (12; 32; 42), which have elastically stretchable material.

3. Connecting arrangement according to Claim 2, **characterized in that** the elastic sleeve segments (42) overlap the flexurally rigid sleeve segments (39) in their circumferential direction with lateral extensions (43), and the extensions (43) are connected to the flexurally rigid sleeve segments (39) in a materially integral manner.

4. Connecting arrangement according to one of Claims 1 to 3, **characterized in that** a stop rib (17) for limiting the push-in of the end portions (3, 4) proceeds around on the inside of the sleeve (7; 27; 37; 47; 57; 67), against which stop rib one end portion (4) bears with its free end and the other end portion (3) bears with a shoulder (21).

5. Connecting arrangement according to Claims 2 and 4, **characterized in that** the stop rib (17) consists of rib segments (17b) formed in one piece with the flexurally rigid sleeve segments (9; 39) and of rib segments (17a) formed in one piece with the elastic sleeve segments (12; 42).

6. Connecting arrangement according to Claim 4, **characterized in that** the stop rib (37) has an elastically stretchable material and is formed in one piece with the elastic sleeve segments (32).

7. Connecting arrangement according to Claim 6, **characterized in that** the flexurally rigid sleeve segments (29) have in their outside depressions (31) in which an elastically stretchable material (33) is embedded.

8. Connecting arrangement according to Claim 7, **characterized in that** the stop rib (37) having an elastically stretchable material is connected in one piece to the elastically stretchable material in the depressions (31) by means of orifices (30) in the flexurally rigid sleeve segments (29).

9. Connecting arrangement according to Claim 1, **characterized in that** the sleeve (57) consists in one piece of hard rubber or of a reinforced and/or crosslinked elastomer.

10. Connecting arrangement according to Claim 1, **characterized in that** the sleeve (67), including the second holding ribs (73), has an elastically stretchable material, and **in that** the second holding ribs (73) lie apart from one another in the circumferential direction, and cylindrical parts (68) made from metal or hard-elastic plastic, which extend over the circumferential region of the second holding ribs (73), are embedded, with legs (69) projecting radially inwards at their circumferential margins, in the elastically stretchable material of the sleeve (67), such that the legs (69) project into the second holding ribs (73).

11. Connecting arrangement according to Claim 9 or 10, **characterized in that** a stop rib (17) for limiting the push-in of the end portions (3, 4) proceeds around on the inside of the sleeve (57; 67), the stop rib (17) having the elastically stretchable material of the sleeve (57; 67).

12. Connecting arrangement according to one of Claims 1 to 11, **characterized in that** the second holding ribs (13; 73) extend over at least 80° and less than 180° of the sleeve circumference.

13. Connecting arrangement according to one of Claims 1 to 12, **characterized in that** grooves (19, 20) extend behind the first holding ribs (18) in the circumferential direction of the end portions (3, 4), the axial width of which grooves corresponds to the axial width of the first holding ribs (13; 73).

14. Connecting arrangement according to one of Claims 1 to 13, **characterized in that,** behind one (18) of the first holding ribs (18) of one end portion (4), on their side facing away from that end of this end portion (4) which is introduced into the sleeve (7; 27; 37; 47; 57; 67), two buses (22) projecting radially at a height corresponding to the radial height of this one holding rib (18) lie diametrically opposite one another with respect to the longitudinal mid-axis of this end portion (4).

15. Connecting arrangement according to one of Claims 1 to 14, **characterized in that** the first holding ribs (18) extend over the entire circumference of the end portions (3, 4).

## Revendications

1. Ensemble de raccordement comprenant des sections terminales (3, 4) de deux conduits de fluide à raccorder (1,2), et comprenant un élément d'accouplement (7 ; 27 ; 37 ; 47 ; 57 ; 67), qui comporte une face extérieure périphérique autour d'un axe, et une face intérieure périphérique autour de l'axe, dans lequel des premières nervures de maintien (18) s'étendent sur la périphérie des sections terminales (3, 4) dans leur direction périphérique, et des secondes nervures de maintien (13 ; 73) s'étendent sur la face intérieure de l'élément d'accouplement (7 ; 27 ; 37 ; 47 ; 57 ; 67) dans sa direction périphérique au voisinage de chaque extrémité axiale de l'élément d'accouplement (7 ; 27 ; 37 ; 47 ; 57 ; 67), et l'élément d'accouplement (7 ; 27 ; 37 ; 47 ; 57 ; 67) est emboîté coaxialement avec élargissement élastique avec les sections terminales (3, 4) et l'une des sections terminales (3) est étanchée avec l'autre section terminale (4), et les secondes nervures de maintien (13 ; 73) sont enclenchées derrière les premières nervures de maintien (18), **caractérisé en ce que** l'élément d'accouplement (7 ; 27 ; 37 ; 47 ; 57 ; 67) est une douille (7 ; 27 ; 37 ; 47 ; 57 ; 67) cylindrique de révolution fermée sur tout le pourtour.

2. Ensemble de raccordement selon la revendication 1, **caractérisé en ce que** la douille (7 ; 27 ; 37 ; 47 ; 57 ; 67) comprend des segments de douille (9 ; 29 ; 39) rigides vis-à-vis de la flexion, qui s'étendent sur au moins 80° et sur moins de 180° en direction périphérique, dont les bordures voisines sont reliées par coopération de matières ou d'une seule pièce par des segments de douille élastique respectifs (12 ; 32 ; 42) qui comprennent un matériau capable de s'allonger élastiquement

3. Ensemble de raccordement selon la revendication 2, **caractérisé en ce que** les segments de douille élastique (42) chevauchent les segments de douille (39) rigides vis-à-vis de la flexion, dans leur direction périphérique avec des prolongements latéraux (43), et les prolongements (43) sont reliés par coopération de matière avec les segments de douille (39) rigides vis-à-vis de la flexion.

4. Ensemble de raccordement selon l'une des revendications 1 à 3, **caractérisé en ce qu'**une nervure de butée (17), destinée à limiter l'introduction des sections terminales (3, 4), est définie en périphérie sur la face intérieure de la douille (7 ; 27 ; 37 ; 47 ; 57 ; 67), nervure contre laquelle l'une des sections terminales (4) s'applique avec son extrémité libre, et l'autre section terminale (3) s'applique avec un épaulement (21).

5. Ensemble de raccordement selon les revendications 2 et 4, **caractérisé en ce que** la nervure de butée (17) est constituée par des segments de nervures (17b) réalisés d'une seule pièce avec les segments de douille (9 ; 39) rigides vis-à-vis de la flexion, et par des segments de nervures (17a) réalisés d'une seule pièce avec les segments de douille élastique (12 ; 42).

6. Ensemble de raccordement selon la revendication 4, **caractérisé en ce que** la nervure de butée (37) comprend un matériau capable d'allongement élastique et est réalisée d'une seule pièce avec les segments de douille élastique (32).

7. Ensemble de raccordement selon la revendication 6, **caractérisé en ce que** les segments de douille (29) rigides vis-à-vis de la flexion comprennent dans leur face extérieure des renfoncements (31) dans lesquels est noyé un matériau (33) capable d'allongement élastique.

8. Ensemble de raccordement selon la revendication 7, **caractérisé en ce que** la nervure de butée (37) qui comprend un matériau capable d'allongement élastique est reliée d'une seule pièce avec le matériau capable d'allongement élastique dans les renfoncements (31), à travers des ouvertures (30) dans les segments de douille (29) rigides vis-à-vis de la flexion.

9. Ensemble de raccordement selon la revendication 1, **caractérisé en ce que** la douille (57) est réalisée d'une seule pièce en caoutchouc dur ou en un élastomère renforcé et/ou réticulé.

10. Ensemble de raccordement selon la revendication 1, **caractérisé en ce que** la douille (67), y compris les secondes nervures de maintien (73), comprend un matériau capable d'allongement élastique, **en ce que** les secondes nervures de maintien (73) situées les unes contre les autres en direction périphérique, et dans le matériau capable d'allongement élastique de la douille (67), des parties cylindriques (68), en métal ou en matière plastique élastique dure, qui s'étendent sur la région périphérique des secondes nervures de maintien (73), sont noyées avec des branches (69) qui font saillie radialement vers l'intérieur au niveau de leurs bordures périphériques, de telle façon que les branches (69) pénètrent dans les secondes nervures de maintien (73).

11. Ensemble de raccordement selon la revendication 9 ou 10, **caractérisé en ce qu'**une nervure de butée (17), destinée à limiter l'introduction des sections terminales (3, 4), est formée en périphérie sur la face intérieure de la douille (57 ; 67), ladite nervure de butée (17) comprenant le matériau capable d'allongement élastique de la douille (57 ; 67).

12. Ensemble de raccordement selon l'une des revendications 1 à 11, **caractérisé en ce que** les secondes nervures de maintien (13 ; 73) s'étendent sur au moins 80° et sur moins de 180° de la périphérie de la douille.

13. Ensemble de raccordement selon l'une des revendications 1 à 12, **caractérisé en ce que** derrière les premières nervures de maintien (18) s'étendent des rainures (19, 20) en direction périphérique des sections terminales (3, 4), dont la largeur axiale correspond à la largeur axiale des premières nervures de maintien (13 ; 73).

14. Ensemble de raccordement selon l'une des revendications 1 à 13, **caractérisé en ce que** derrière l'une (18) des premières nervures de maintien (18) de l'une des sections terminales (4), sur son côté détourné de l'extrémité de cette section terminale (4) introduite dans la douille (7 ; 27 ; 37 ; 47 ; 57 ; 67), sont prévues deux cames (22), qui dépassent radialement à une hauteur qui correspond à la hauteur radiale de ladite nervure de maintien (18), et qui sont opposées diamétralement par référence à l'axe médian longitudinal de cette section terminale (4).

15. Ensemble de raccordement selon l'une des revendications 1 à 14, **caractérisé en ce que** les premières nervures de maintien (18) s'étendent sur la totalité de la périphérie des sections terminales (3, 4).
